# FASCICULE DE BREVET EUROPEEN

(11) **EP 4 066 224 B1**
(45) Date de publication et mention de la délivrance du brevet: **09.09.2026**
(21) Numéro de dépôt: 20807807.1
(22) Date de dépôt: 23.11.2020
(51) Int. Cl.: G08G 5/22, G08G 5/56, G08G 5/72, G08G 5/80

(54) **DISPOSITIF ET PROCEDE D'AIDE A LA DECISION POUR LA GESTION DE CONFLITS AERIENS**
ENTSCHEIDUNGSUNTERSTÜTZUNGSVORRICHTUNG UND VERFAHREN ZUM VERWALTEN VON LUFTKONFLIKTEN
DECISION ASSISTANCE DEVICE AND METHOD FOR MANAGING AERIAL CONFLICTS

(30) Priorité: 25.11.2019 FR 1913153
(43) Date de publication de la demande: 05.10.2022
(73) Titulaire: THALES, 92190 Meudon (FR)
(72) Inventeur: SOUKARIE, Rémy, 94628 RUNGIS (FR); PURICA, Andrei, 94628 RUNGIS (FR); MEUNIER, Dimitri, 94628 RUNGIS (FR); PESQUET, Béatrice, 94628 RUNGIS (FR)
(74) Mandataire: Atout PI Laplace
(86) Numéro de dépôt international: PCT/EP2020/083049
(87) Numéro de publication internationale: WO 2021/105055

(56) Documents cités:
- WO-A1-2019/122842
- WO-A1-2019/122842
- US-A1- 2013 332 059
- US-A1- 2013 332 059
- US-A1- 2018 253 979
- US-A1- 2018 253 979
- MARC BRITTAIN ET AL: "Autonomous Air Traffic Controller: A Deep Multi-Agent Reinforcement Learning Approach", ARXIV.ORG, CORNELL UNIVERSITY LIBRARY, 201 OLIN LIBRARY CORNELL UNIVERSITY ITHACA, NY 14853, 2 May 2019 (2019-05-02), XP081272048
- MARC BRITTAIN ET AL: "Autonomous Air Traffic Controller: A Deep Multi-Agent Reinforcement Learning Approach", ARXIV.ORG, CORNELL UNIVERSITY LIBRARY, 201 OLIN LIBRARY CORNELL UNIVERSITY ITHACA, NY 14853, 2 May 2019 (2019-05-02), XP081272048

## Description

### Domaine technique

L'invention concerne de manière générale les systèmes d'aide à la décision, et en particulier un système et un procédé d'aide à la décision pour la gestion de conflits aériens.

### Art Antérieur

Le développement de systèmes d'aide à la décision a connu un essor croissant ces dernières années et s'est étendu à de nombreux secteurs industriels, notamment dans les secteurs où il existe un enjeu de sécurité, comme par exemple dans le domaine des systèmes de contrôle aérien.

Les systèmes de contrôle aérien doivent assurer la sécurité du trafic aérien. Les systèmes de contrôle aérien sont conçus pour garantir des distances de sécurité entre les avions de leurs secteurs tout en maintenant des distances minimales de sécurité entre les avions dont les trajectoires vont se rapprocher, en modifiant au moins une de ces trajectoires. Les systèmes de contrôle aérien connus sont équipés d'outils de contrôle du trafic aérien qui permettent notamment la détection de conflits aériens, et/ou fournissent une aide à la décision pour la gestion des conflits aériens, comme par exemple la solution WO 2019/122842 A1 and US 2013/332059 A1. 1

Il existe deux approches connues pour la gestion des conflits aériens.

Une première approche se base sur des calculs géométriques pour assurer une décision continue dans le temps, ce qui implique une utilisation intense de ressources de calcul puissantes.

Une seconde approche repose sur l'utilisation d'algorithmes d'intelligence artificielle pour la résolution de conflits aériens tout en minimisant les ressources requises pour les calculs.

Par exemple, dans l'article « Reinforcement Learning for Two-Aircraft Conflict Resolution in the Presence of Uncertainty, Pham et al., Air Traffic Management Research Institute, School of Mechanical and Aerospace Engineering Nanyang Technological University, Singapore, March 2019», une solution d'apprentissage par renforcement est proposée pour automatiser la résolution de conflits aériens . Une telle solution est prévue pour assurer le maintien de distances de séparation minimales. Cette solution met en œuvre un algorithme appelé 'Deep Deterministic Policy Gradient' utilisant un réseau de neurones artificiels dense qui permet une résolution de conflit restreinte à deux avions ne naviguant qu'en ligne droite et à un espace bidimensionnel avec une seule action possible de résolution qui consiste en un changement de direction avec retour sur un point nommé de la trajectoire initiale.

L'article « Autonomous Air Traffic Controller : A Deep Multi-Agent Reinforcement Learning Approach, Marc Brittain, Peng Wei, Department of Aerospace Engineering, lowa State University, May 2019 » décrit une autre solution d'apprentissage par renforcement pour automatiser la résolution de conflits aériens, la solution mettant en œuvre un algorithme par renforcement multi-agent profond ('Deep multi-agent reinforcement learning' en langue anglosaxonne) avec réseaux de neurones artificiels denses pour l'approximation. Cette solution permet la résolution de conflits sans restriction sur le nombre d'avions. Cependant, la résolution de conflits aériens selon cette solution est restreinte à un espace bidimensionnel avec pour seule action possible de résolution le changement de vitesse. En outre, le réseau de neurones mis en œuvre dans cette solution doit être ré-entrainé pour chaque type de scénario et ne permet pas la généralisation à une nouvelle suite de points nommés.

L'article « Autonomous Aircraft Sequencing and Separation with Hierarchical Deep Reinforcement Learning, Marc Brittain, Peng Wei, Department of Aerospace Engineering, lowa State University, 2018 » décrit également une solution d'apprentissage par renforcement pour la résolution de conflits aériens. Cette solution permet un choix des plans de vols en utilisant deux réseaux de neurones imbriqués l'un dans l'autre de manière à ce qu'un premier réseau (« réseau père ») choisisse les plans de vol, et que le second réseau (« réseau fils ») régule la vitesse pour maintenir la séparation entre les avions. Cette solution permet le maintien de la séparation et la résolution du conflit si la séparation est perdue ainsi qu'une minimisation du temps de trajet. Cependant, la résolution de conflit selon cette solution est restreinte à un espace bidimensionnel avec pour seule action possible de résolution le changement de vitesse. De plus, cette solution fonctionne pour un nombre très limité d'avions et requiert l'entraînement des réseaux de neurones pour chaque type de scénario.

Les solutions existantes de gestion des conflits aériens se limitent toutefois à un nombre restreint de configurations possibles en termes de nombre d'avions, de couloirs aériens, de catégories d'avions, de vitesses ou d'altitudes d'avions, ou encore d'actions possibles pour résoudre les conflits détectés.

Il existe donc un besoin pour un système et un procédé de gestion du trafic aérien amélioré capable de résoudre efficacement les conflits aériens.

### Définition Générale de l'invention

L'invention vient améliorer la situation. A cet effet, l'invention propose un dispositif de gestion de trafic aérien, dans un espace aérien comprenant un aéronef de référence et au moins un autre aéronef, le dispositif recevant une représentation tridimensionnelle de l'espace aérien à un instant où un conflit aérien est détecté entre l'aéronef de référence et l'au moins un autre aéronef, le dispositif étant caractérisé en ce qu'il comprend :
- une unité d'encodage de l'espace aérien configurée pour déterminer une représentation de l'espace aérien en dimension réduite en appliquant un auto-encodeur récurrent à la représentation tridimensionnelle de l'espace aérien à l'instant de détection du conflit aérien
- une unité d'aide à la décision configurée pour déterminer une action de résolution de conflit à mettre en œuvre par l'aéronef de référence, l'unité d'aide à la décision mettant en œuvre un algorithme d'apprentissage par renforcement profond pour déterminer l'action à partir de ladite représentation de l'espace aérien en dimension réduite, d'informations relatives à l'aéronef de référence et/ou à l'au moins un autre aéronef, et d'une géométrie correspondant audit conflit aérien.

Selon certains modes de réalisation, l'auto-encodeur récurrent peut être préalablement entraîné en utilisant des données réelles des plans de vol de l'aéronef de référence et de l'au moins un autre aéronef.

Selon certains modes de réalisation, l'auto-encodeur peut être un auto-encodeur LSTM (Long Short-Term Memory).

Selon certains modes de réalisation, l'algorithme d'apprentissage par renforcement profond peut être préalablement entraîné à approximer, pour une représentation donnée d'un scénario dans l'espace aérien à l'instant où un conflit est détecté, une fonction de récompense, ladite action correspondant à une stratégie optimale maximisant ladite fonction de récompense lors de la phase d'entraînement.

Selon certains modes de réalisation, la fonction de récompense peut associer une valeur à chaque triplé comprenant une situation aérienne à un premier instant donné, une action prise à un temps donné, et une situation aérienne à un second instant donné, ladite valeur se décomposant en plusieurs pénalités comprenant:
- une pénalité positive si l'action prise à l'instant donné a résolu le conflit, ou
- une pénalité négative si l'action prise à l'instant donné n'a pas permis de résoudre le conflit ou a engendré au moins un autre conflit aérien ;
- une pénalité négative si l'action prise à l'instant donné engendre une nouvelle trajectoire provoquant un détour ;
- une pénalité positive si l'action prise à l'instant donné engendre une nouvelle trajectoire plus courte;
- une pénalité négative si l'action prise à l'instant donné permet de résoudre le conflit aérien et la résolution a lieu proche du conflit ;
- une pénalité négative croissante avec le nombre d'actions prises pour la résolution du conflit aérien.

Selon certains modes de réalisation, l'algorithme d'apprentissage par renforcement profond peut être préalablement entraîné en utilisant des données opérationnelles et des scénarios correspondant à toutes les manœuvres possibles de l'aéronef de référence, toutes les actions possibles pour résoudre le conflit aérien, et toutes les catégories possibles des aéronefs en conflit.

Selon certains modes de réalisation, l'algorithme d'apprentissage par renforcement profond peut être un réseau de neurones profond mettant en œuvre une technique d'apprentissage par renforcement.

Selon certains modes de réalisation, l'algorithme d'apprentissage par renforcement profond peut être choisi parmi les algorithmes de la famille des algorithmes de Q-learning ou de la famille des algorithmes actor-critic.

Selon certains modes de réalisation, au moins deux aéronefs parmi l'aéronef de référence et l'au moins un autre aéronef peuvent être de catégories différentes.

Selon certains modes de réalisation, l'action peut être choisie dans un groupe comprenant la régulation de la vitesse de l'aéronef de référence, le changement d'altitude de l'aéronef de référence, le changement de direction de l'aéronef de référence avec retour sur la trajectoire initiale, le direct sur un point nommé, et l'attente sans faire d'action.

Les modes de réalisation de l'invention fournissent en outre un procédé pour la gestion de trafic aérien, dans un espace aérien comprenant un aéronef de référence et au moins un autre aéronef, le procédé comprenant une étape pour recevoir une représentation tridimensionnelle de l'espace aérien à un instant où un conflit aérien est détecté entre l'aéronef de référence et l'au moins un autre aéronef, le procédé étant caractérisé en ce qu'il comprend les étapes consistant à :
- déterminer une représentation de l'espace aérien en dimension réduite en appliquant un auto-encodeur récurrent à la représentation tridimensionnelle de l'espace aérien à l'instant de détection de conflit aérien;
- déterminer une action de résolution de conflit à mettre en œuvre par l'aéronef de référence, l'action étant déterminée à partir de la représentation de l'espace aérien en dimension réduite, d'informations relatives à l'aéronef de référence et/ou à l'au moins un autre aéronef, et d'une géométrie correspondant au conflit aérien, en mettant en œuvre un algorithme d'apprentissage par renforcement profond pour déterminer ladite action.

Avantageusement, les modes de réalisation de l'invention permettent de résoudre des conflits aériens dans un espace aérien tridimensionnel (3D), considérant un nombre d'aéronefs et de couloirs aériens non limités, des géométries de conflits ne se limitant pas aux lignes droites, une hétérogénéité des catégories et de compagnies d'aéronefs, et un nombre élevé d'actions possibles pour la résolution de conflits aériens comprenant la régulation de la vitesse, le changement d'altitude, le changement de direction avec retour sur la trajectoire initiale, la possibilité de couper la route, et la prise d'aucune action (qui est une action en soi). Le choix de l'action effectuée permet de résoudre le conflit aérien tout en tenant compte des autres aéronefs environnants pour éviter de nouveaux conflits et tout en minimisant l'éventuel détour effectué, ce qui permet de réduire la consommation de carburant.

Avantageusement, les modes de réalisation de l'invention permettent l'aide à la décision pour la résolution de conflits aériens tenant compte des considérations techniques et préférences des contrôleurs aériens et des pilotes pour favoriser certaines actions (par exemple éviter le changement d'altitude dans la mesure du possible).

Avantageusement, les modes de réalisation de l'invention fournissent une aide à la décision pour la résolution de conflits aériens à moyen terme en utilisant un algorithme d'apprentissage par renforcement profond.

Avantageusement, l'algorithme d'apprentissage par renforcement selon les modes de réalisation de l'invention se généralise à n'importe quel type de scénario et à des géométries de conflits non précédemment rencontrés sans nécessiter le réentraînement pour chaque type de scénario.

Avantageusement, l'algorithme d'apprentissage par renforcement selon les modes de réalisation de l'invention met en œuvre un réseau de neurones récurrent pour permettre la résolution de conflits sans limitation du nombre d'aéronefs.

Avantageusement, l'algorithme d'apprentissage par renforcement selon les modes de réalisation de l'invention tient compte de trois niveaux d'incertitude sur l'impact d'une action possible pour la résolution de conflits aériens.

Avantageusement, les modes de réalisation de l'invention fournissent une aide à la décision pour les contrôleurs aériens.

### Brève description des dessins

D'autres caractéristiques et avantages de l'invention apparaîtront à l'aide de la description qui suit faite en référence aux dessins annexés, donnés à titre d'exemple, et qui représentent, respectivement :
- La figure 1 est un schéma représentant un dispositif de gestion de conflit aérien, selon certains modes de réalisation de l'invention.
- La figure 2 est un logigramme représentant un procédé pour la gestion de conflit aérien, selon certains modes de réalisation de l'invention.

### Description détaillée

Les modes de réalisation de l'invention fournissent un dispositif et un procédé pour la gestion d'un conflit aérien entre un aéronef de référence et au moins un autre aéronef (aussi référencé 'au moins un second aéronef') à partir d'une représentation tridimensionnelle de l'espace aérien à l'instant où le conflit aérien est détecté.

Les modes de réalisation de l'invention peuvent être utilisés dans les systèmes de contrôles du trafic aérien pour l'aide à la décision aux contrôleurs aériens afin de résoudre les conflits aériens, prévenir les collisions entre aéronefs, et gérer la circulation aérienne.

Selon les modes de réalisation de l'invention, un aéronef peut être tout type d'aéronef tel qu'un avion, un hélicoptère, une montgolfière, ou un drone.

Tel qu'utilisé ici, un plan de vol d'un aéronef est une suite de points nommés dans un espace à quatre dimensions comprenant une latitude, une longitude, une altitude, et une valeur temporelle (ou temps de passage ou 'Estimated Time of Overflight' en langue anglosaxonne). Les points nommés représentent la trajectoire que doit suivre l'aéronef aux temps indiqués par les valeurs temporelles.

Tel qu'utilisé ici, un scénario représente un ensemble de plans de vols avec les identifiants et les catégories d'au moins un aéronef.

Selon certains modes de réalisation, deux aéronefs parmi l'aéronef de référence et l'au moins un autre aéronef peuvent être de catégories différentes.

Selon certains modes de réalisation dans lesquels l'aéronef de référence et l'au moins un autre aéronef sont des avions, l'aéronef de référence et au moins un autre aéronef peuvent être de compagnies d'avions différentes.

Selon certains modes de réalisation, l'aéronef de référence peut être préalablement sélectionné de façon aléatoire.

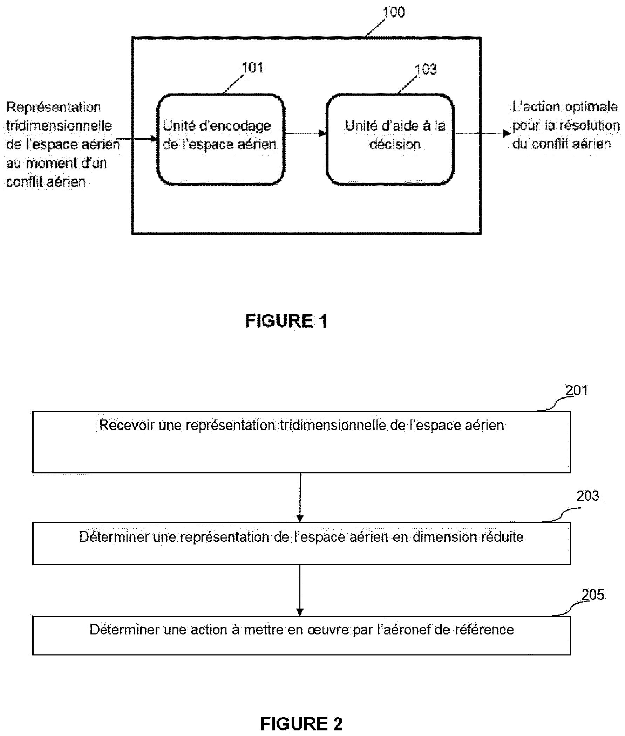

En référence à la figure 1, les modes de réalisation de l'invention fournissent un dispositif 100 pour la gestion d'un conflit aérien entre un aéronef de référence et au moins un autre aéronef à partir d'une représentation tridimensionnelle de l'espace aérien à l'instant où le conflit aérien est détecté.

Selon certains modes de réalisation, le dispositif 100 peut comprendre une unité d'encodage de l'espace aérien 101 configurée pour déterminer une représentation de l'espace aérien en dimension réduite en appliquant un auto-encodeur récurrent à la représentation tridimensionnelle de l'espace aérien à l'instant de détection du conflit aérien, l'encodage de l'espace aérien correspondant à l'aéronef de référence et à l'au moins un autre aéronef impliqués dans le conflit aérien. L'auto-encodeur récurrent est un réseau de neurones artificiels utilisé pour apprendre une représentation (ou encodage) d'un ensemble de données dans le but de réduire la dimension de cet ensemble.

Selon certains modes de réalisation, l'auto-encodeur récurrent peut être préalablement entraîné en utilisant des données réelles des plans de vol de l'aéronef de référence et de l'au moins un autre aéronef, indépendamment de la résolution du conflit aérien. Cette phase d'entraînement peut être effectuée hors ligne en utilisant une variante de la rétro-propagation comme la méthode du gradient conjugué ou l'algorithme du gradient. L'aspect récurrent de l'auto-encodeur permet avantageusement de gérer un nombre variable d'aéronefs et de ne pas faire dépendre l'architecture du réseau de neurones du nombre d'aéronefs présents simultanément dans l'espace aérien.

Selon certains modes de réalisation, l'auto-encodeur peut être un auto-encodeur LSTM (acronyme de 'Long Short-Term Memory' en langage anglo-saxon).

Selon certains modes de réalisation, le dispositif 100 peut en outre comprendre une unité d'aide à la décision 103 configurée pour fournir une action à mettre en œuvre par l'aéronef de référence pour résoudre le conflit aérien, l'unité d'aide à la décision 103 appliquant un algorithme d'apprentissage par renforcement profond pour déterminer l'action à partir de la représentation de l'espace aérien en dimension réduite fournie par l'auto-encodeur, d'informations relatives à l'aéronef de référence et/ou à l'au moins un autre aéronef, et de la géométrie correspondant au conflit aérien.

Selon certains modes de réalisation, les informations relatives à l'aéronef de référence et/ou à l'au moins un autre aéronef peuvent comprendre la distance verticale, la distance horizontale, et l'azimut entre l'aéronef de référence et l'au moins un autre aéronef. Les informations peuvent en outre comprendre les distances et les angles entre l'aéronef de référence et au moins un aéronef non inclus dans le conflit aérien, ainsi que la catégorie de l'aéronef de référence et la position des derniers points nommés.

Selon certains modes de réalisation, l'action peut être choisie dans un groupe comprenant la régulation de la vitesse de l'aéronef de référence, le changement d'altitude de l'aéronef de référence, le changement de direction de l'aéronef de référence avec retour sur la trajectoire initiale, le direct sur un point nommé, l'attente sans faire d'action.

Selon les modes de réalisation de l'invention, l'unité d'aide à la décision 103 se base sur des techniques d'apprentissage par renforcement profond combinant l'apprentissage par renforcement avec les réseaux de neurones artificiels pour déterminer, à partir de l'encodage de l'espace aérien au moment du conflit aérien, l'action optimale à mettre en œuvre par l'aéronef de référence pour résoudre le conflit aérien tout en tenant compte d'un ensemble de contraintes. L'ensemble de contrainte selon les modes de réalisation de l'invention comprend :
- la gestion de l'espace aérien tridimensionnel ;
- la gestion de tous les types d'actions possibles pour la résolution de conflits aériens;
- la gestion d'un nombre variable d'aéronefs avec hétérogénéité des catégories et des compagnies ;
- la résolution du conflit aérien avec prise en compte des aéronefs alentour pour éviter la création de nouveaux conflits aériens, et
- la résolution efficace du conflit aérien tout en minimisant le détour effectué suite à une prise d'action, et la prise en compte de scénarios et de géométries de conflits non précédemment rencontrés.

L'apprentissage par renforcement consiste, pour un agent autonome, à apprendre les actions à prendre, à partir d'expériences, de façon à optimiser une fonction de récompense quantitative au cours du temps.

L'agent autonome est plongé dans un environnement et prend ses décisions en fonction de son état courant. En retour, l'environnement procure à l'agent autonome une récompense, qui est une valeur numérique qui peut être positive, négative, ou nulle, les récompenses positivent mettant l'accent sur une action désirée, les récompenses négatives mettant l'accent sur une action dont l'agent doit s'éloigner, et les récompenses nulles indiquant que l'action est neutre. L'environnement peut changer au fur et à mesure que l'agent prend des actions, les actions étant les méthodes de l'agent lui permettant d'interagir et de changer son environnement, et donc de se transférer entre états.

L'agent autonome, cherche, au travers d'expériences itérées, un comportement décisionnel (aussi appelé 'stratégie' ou 'politique') optimal permettant la maximisation des récompenses au cours du temps.

La base du modèle d'apprentissage par renforcement consiste ainsi en :
- un ensemble d'états S de l'agent dans l'environnement ;
- un ensemble d'actions *A* que l'agent peut effectuer, et
- un ensemble de valeurs scalaires *R* (aussi appelées récompenses ou fonction de récompenses) que l'agent peut obtenir de la part de l'environnement. Chaque fonction de récompense reflète le comportement que doit adopter l'agent.

A chaque pas de temps t de l'algorithme d'apprentissage par renforcement, l'agent perçoit sont état *sₜ* ∈ *S* (aussi appelée situation à l'instant donné t) et l'ensemble des actions possibles *A(st).* L'agent choisit une action *a* ∈ *A*(*sₜ*) (aussi appelée l'action prise à l'instant donné t) et reçoit de l'environnement un nouvel état *s*_{*t*+1} (aussi appelé la situation à l'instant donné t+1) et une récompense *R*_{*t*+1}. La décision de l'action à choisir par l'agent est prise par une politique *π*: *S* → *A* qui est une fonction qui conditionnellement à un état, associe une probabilité de sélection à chaque action dans cet état. Le but de l'agent est de maximiser les récompenses globales qu'il reçoit de la part de l'environnement au cours d'un épisode, un épisode comprenant tous les états de l'agent qui se situent entre un état initial et un état terminal. La valeur désignée par Q-valeur et notée *Q(s, a*), mesure la récompense globale attendue si l'agent est dans l'état *s* ∈ *S* et effectue l'action *a*, puis continue à interagir avec son environnement jusqu'à la fin de l'épisode courant selon une politique *π*.

Selon les modes de réalisation de l'invention :
- chaque aéronef est un agent autonome qui doit apprendre à résoudre les conflits dans l'espace aérien ;
- l'environnement de l'agent est une représentation de l'espace aérien décrite par un scénario, et
- les actions prises par un aéronef comprennent toutes les actions possibles de contrôle aérien comprenant le changement de direction, le changement d'altitude, le changement de vitesse, le direct sur un point nommé, et le changement de direction avec retour sur la trajectoire initiale.

Selon certains modes de réalisation, l'agent peut ne pas observer la totalité de l'environnement mais seulement quelques variables lui permettant d'évoluer efficacement dans l'environnement. Ces variables peuvent comprendre la vélocité, la position, et l'altitude de l'agent et de tous les autres aéronefs présents, ainsi que des informations sur le conflit aérien à résoudre et les positions des points nommés sur lesquels l'agent peut faire un 'direct'.

Selon certains modes de réalisation, l'algorithme d'apprentissage par renforcement profond peut être préalablement entraîné à approximer, pour une représentation donnée du scénario dans l'espace aérien à l'instant de détection d'un conflit, une fonction de récompense, de manière à ce que l'action (optimale) à mettre en œuvre par l'aéronef de référence corresponde à la stratégie optimale apprise permettant la maximisation de la fonction de récompense. L'entraînement de l'algorithme d'apprentissage par renforcement permet ainsi de déterminer les sommes cumulées (ou des récompenses globales) futures que peut obtenir l'agent pour une action et une situation (ou scénario) donnés. Après l'entraînement et la convergence de l'algorithme d'apprentissage par renforcement, l'action qui rapporte la fonction de récompense maximale peut être fournie à l'aéronef de référence afin de suivre la stratégie optimale pour la résolution du conflit aérien.

Selon certains modes de réalisation, la fonction de récompense peut être préalablement modélisée afin que la stratégie optimale de maximisation des récompenses corresponde à l'ensemble des contraintes précédemment défini. Selon certains modes de réalisation, la fonction de récompense peut être modélisée pour associer une valeur à chaque triplé comprenant une situation aérienne à un premier instant donné t, une action *a* prise à un temps donné t, et une situation aérienne à un second instant donné t+1, la valeur reflétant l'attractivité du triplé et se décomposant en plusieurs pénalités comprenant :
- une pénalité positive si l'action *a* prise à l'instant donné t a résolu le conflit
- une pénalité négative si l'action *a* prise à l'instant donné t n'a pas permis de résoudre le conflit ou a engendré au moins un autre conflit aérien
- une pénalité négative si l'action *a* prise à l'instant donné t engendre une nouvelle trajectoire provoquant un détour
- une pénalité positive si l'action *a* prise à l'instant donné t engendre une nouvelle trajectoire plus courte
- une pénalité négative si l'action *a* prise à l'instant donné t permet de résoudre le conflit aérien et la résolution a lieu proche du conflit, et
- une pénalité négative croissante avec le nombre d'actions prises pour la résolution du conflit aérien.

Selon certains modes de réalisation, l'algorithme d'apprentissage par renforcement profond peut être préalablement entraîné en utilisant des données opérationnelles et des scénarios correspondant à toutes les manœuvres possibles de l'aéronef de référence, toutes les actions possibles pour résoudre un conflit aérien, et toutes les catégories possibles des aéronefs en conflit.

Selon certains modes de réalisation, l'algorithme d'apprentissage par renforcement profond peut être préalablement entraîné en utilisant des scénarios réalistes créés automatiquement à partir de données opérationnelles et en réalisant l'augmentation des données pour un apprentissage profond par exemple en variant les catégories des aéronefs, en ajoutant des délais sur certains aéronefs permettant de modifier et rajouter des conflits aériens.

Selon certains modes de réalisation, l'algorithme d'apprentissage par renforcement profond peut être préalablement entraîné en utilisant des données générées par des dispositifs de détection de conflits et/ou des dispositifs de modification de trajectoires (non illustrés sur la figure 1).

Selon certains modes de réalisation, l'algorithme d'apprentissage par renforcement profond peut être un réseau de neurones profond mettant en œuvre une technique d'apprentissage par renforcement.

Selon certains modes de réalisation, l'algorithme d'apprentissage par renforcement profond peut être choisi parmi les algorithmes de la famille des algorithmes de Q-learning ou de la famille des algorithmes actor-critic.

En référence à la figure 2, les modes de réalisation de l'invention fournissent en outre un procédé pour la gestion d'un conflit aérien entre un aéronef de référence et au moins un autre aéronef à partir d'une représentation tridimensionnelle de l'espace aérien à l'instant où le conflit aérien est détecté.

A l'étape 201, une représentation tridimensionnelle de l'espace aérien au moment du conflit aérien peut être reçue.

A l'étape 203, une représentation de l'espace aérien en dimension réduite peut être déterminée en appliquant un auto-encodeur récurrent à la représentation tridimensionnelle de l'espace aérien à l'instant de détection du conflit aérien, l'encodage de l'espace aérien correspondant à l'aéronef de référence et à l'au moins un autre aéronef impliqués dans le conflit aérien.

Selon certains modes de réalisation, l'étape 203 peut comprendre une sous-étape effectuée hors ligne pour entraîner l'auto-encodeur récurrent en utilisant des données réelles des plans de vol de l'aéronef de référence et de l'au moins un autre aéronef, indépendamment de la résolution du conflit aérien.

Selon certains modes de réalisation, l'auto-encodeur récurrent peut être entraîné en utilisant une variante de la rétro-propagation comme la méthode du gradient conjugué ou l'algorithme du gradient.

Selon certains modes de réalisation, l'auto-encodeur récurrent peut être un auto-encodeur LSTM.

A l'étape 205, une action à mettre en œuvre par l'aéronef de référence peut être déterminée à partir de la représentation de l'espace aérien en dimension réduite, d'informations relatives à l'aéronef de référence et/ou l'au moins un autre aéronef, et de la géométrie du conflit aérien, en appliquant un algorithme d'apprentissage par renforcement profond.

Selon certains modes de réalisation, les informations relatives à l'aéronef de référence et/ou l'au moins un autre aéronef peuvent comprendre la distance verticale, la distance horizontale, et l'azimut entre l'aéronef de référence et l'au moins un autre aéronef. Les informations peuvent en outre comprendre les distances et les angles entre l'aéronef de référence et au moins un aéronef non inclus dans le conflit aérien, ainsi que la catégorie de l'aéronef de référence et la position des derniers points nommés.

Selon certains modes de réalisation, l'action à mettre en œuvre par l'aéronef de référence peut être choisie dans un groupe comprenant la régulation de la vitesse de l'aéronef de référence, le changement d'altitude de l'aéronef de référence, le changement de direction de l'aéronef de référence avec retour sur la trajectoire initiale, le direct sur un point nommé, l'attente sans faire d'action.

Selon certains modes de réalisation, l'algorithme d'apprentissage par renforcement profond peut être conçu pour déterminer l'action optimale parmi toutes les actions possibles pour la résolution de conflits aériens en respectant un ensemble de contraintes ou exigences comprenant :
- la gestion de l'espace aérien tridimensionnel ;
- la gestion de tous les types d'actions possibles pour la résolution de conflits aériens ;
- la gestion d'un nombre variable d'aéronefs avec hétérogénéité des catégories et des compagnies ;
- la résolution du conflit aérien avec prise en compte des aéronefs alentour pour éviter la création de nouveaux conflits aériens, et
- la résolution efficace du conflit aérien tout en minimisant le détour effectué suite à une prise d'action, et la prise en compte de scénarios et de géométries de conflits non précédemment rencontrés.

Selon les modes de réalisation de l'invention, le modèle de l'algorithme d'apprentissage par renforcement profond peut être définie par :
- un agent autonome correspondant à un aéronef, l'agent autonome devant apprendre les actions à prendre pour résoudre les conflits dans l'espace aérien à partir d'expérience de façon à optimiser une fonction de récompense au cours du temps ;
- l'environnement de l'agent correspond à une représentation de l'espace aérien décrite par un scénario, l'agent étant plongé dans cet environnement et prenant des actions lui permettant d'interagir et de changer son environnement et de changer d'états ;
- les actions prises par un agent comprennent toutes les actions possibles de contrôle aérien que peut prendre un aéronef pour résoudre un conflit aérien, comprenant le changement de direction, le changement d'altitude, le changement de vitesse, le direct sur un point nommé, et le changement de direction avec retour sur la trajectoire initiale.

Selon certains modes de réalisation, l'agent peut ne pas observer la totalité de l'environnement mais seulement quelques variables lui permettant d'évoluer efficacement dans l'environnement. Ces variables peuvent comprendre la vélocité, la position, et l'altitude de l'agent et de tous les autres aéronefs présents, ainsi que des informations que le conflit aérien à résoudre et les positions des points nommés sur lesquels l'agent peut faire un 'direct'.

A chaque pas de temps t de l'algorithme d'apprentissage par renforcement, l'agent perçoit sont état *sₜ* ∈ *S* à l'instant donné t et l'ensemble des actions possibles *A(st).* L'agent choisit une action *a* ∈ *A*(*sₜ*) et reçoit de l'environnement un nouvel état *s*_{*t*+1} correspondant à la situation à l'instant donné t+1 et une récompense *R*_{*t*+1}. La décision de l'action à choisir par l'agent est prise par une politique *π*: *S* → *A* qui est une fonction qui conditionnellement à un état, associe une probabilité de sélection à chaque action dans cet état. Le but de l'agent est de maximiser les récompenses globales qu'il reçoit de la part de l'environnement au cours d'un épisode, un épisode comprenant tous les états de l'agent qui se situent entre un état initial et un état terminal. La valeur désignée par Q-valeur et notée *Q*(*s, a*), mesure la récompense globale attendue si l'agent est dans l'état *s* ∈ *S* et effectue l'action *a*, puis continue à interagir avec son environnement jusqu'à la fin de l'épisode courant selon une politique *π*.

Selon certains modes de réalisation, l'algorithme d'apprentissage par renforcement profond peut être préalablement entraîné à approximer, pour une représentation donnée du scénario dans l'espace aérien au moment d'un conflit, une fonction de récompense, de manière à ce que l'action à mettre en œuvre par l'aéronef de référence corresponde à la stratégie optimale apprise permettant la maximisation de la fonction de récompense. L'entraînement de l'algorithme d'apprentissage par renforcement permet ainsi de déterminer les sommes cumulées (ou des récompenses globales) futures que peut obtenir l'agent pour une action et une situation (ou scénario) donnés. Après l'entraînement et la convergence de l'algorithme d'apprentissage par renforcement, l'action qui rapporte la fonction de récompense maximale pour la situation courante donnée au moment du conflit peut être sélectionnée, elle représente l'action qui correspond à la stratégie optimale pour la résolution du conflit aérien.

Selon certains modes de réalisation, la fonction de récompense peut être préalablement modélisée afin que la stratégie optimale de maximisation des récompenses corresponde à l'ensemble des contraintes précédemment défini. Selon certains modes de réalisation, la fonction de récompense peut être modélisée pour associer une valeur à chaque triplé comprenant une situation aérienne à un premier instant donné t, une action *a* prise à un temps donné t, et une situation aérienne à un second instant donné t+1, la valeur reflétant l'attractivité du triplé et se décomposant en plusieurs pénalités comprenant :
- une pénalité positive si l'action *a* prise à l'instant donné t a résolu le conflit ;
- une pénalité négative si l'action *a* prise à l'instant donné t n'a pas permis de résoudre le conflit ou a engendré au moins un autre conflit aérien;
- une pénalité négative si l'action *a* prise à l'instant donné t engendre une nouvelle trajectoire provoquant un détour ;
- une pénalité positive si l'action *a* prise à l'instant donné t engendre une nouvelle trajectoire plus courte ;
- une pénalité négative si l'action *a* prise à l'instant donné t permet de résoudre le conflit aérien et la résolution a lieu proche du conflit, et
- une pénalité négative croissante avec le nombre d'actions prises pour la résolution du conflit aérien.

Selon certains modes de réalisation, l'algorithme d'apprentissage par renforcement profond peut être préalablement entraîné en utilisant des données opérationnelles et des scénarios correspondant à toutes les manœuvres possibles de l'aéronef de référence, toutes les actions possibles pour résoudre un conflit aérien, et toutes les catégories possibles des aéronefs en conflit.

Selon certains modes de réalisation, l'algorithme d'apprentissage par renforcement profond peut être préalablement entraîné en utilisant des scénarios réalistes créés automatiquement à partir de données opérationnelles et en réalisant l'augmentation des données pour un apprentissage profond par exemple en variant les catégories des aéronefs, en ajoutant des délais sur certains aéronefs permettant de modifier et rajouter des conflits aériens.

Selon certains modes de réalisation, l'algorithme d'apprentissage par renforcement profond peut être un réseau de neurones profond mettant en œuvre une technique d'apprentissage par renforcement.

Selon certains modes de réalisation, l'algorithme d'apprentissage par renforcement profond peut être choisi parmi les algorithmes de la famille des algorithmes de Q-learning ou de la famille des algorithmes actor-critic.

L'invention fournit en outre un produit programme d'ordinateur pour la gestion d'un conflit aérien entre un aéronef de référence et au moins un autre aéronef à partir d'une représentation tridimensionnelle de l'espace aérien à l'instant où le conflit aérien est détecté, le produit programme d'ordinateur comprenant des instructions de code de programme informatique qui, lorsqu'elles sont exécutées par un ou plusieurs processeurs, amènent le ou les processeurs à :
- déterminer une représentation de l'espace aérien en dimension réduite en appliquant un auto-encodeur récurrent à la représentation tridimensionnelle de l'espace aérien à l'instant de détection du conflit aérien;
- déterminer une action à mettre en œuvre par l'aéronef de référence à partir de la représentation de l'espace aérien en dimension réduite, d'informations relatives à l'aéronef de référence et/ ou l'au moins un autre aéronef, et de la géométrie du conflit aérien, en appliquant un algorithme d'apprentissage par renforcement profond.

En général les routines exécutées pour mettre en œuvre les modes de réalisation de l'invention, qu'elles soient mises en œuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées comme "code de programme informatique" ou simplement "code de programme". Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

## Revendications

1. Dispositif (100) de gestion de trafic aérien, dans un espace aérien comprenant un aéronef de référence et au moins un autre aéronef, le dispositif (100) utilisant une représentation tridimensionnelle de l'espace aérien à un instant où un conflit aérien est détecté entre l'aéronef de référence et ledit au moins un autre aéronef, le dispositif étant **caractérisé en ce qu'**il comprend :
- une unité d'encodage de l'espace aérien (101) configurée pour déterminer une représentation de l'espace aérien en dimension réduite en appliquant un auto-encodeur récurrent à ladite représentation tridimensionnelle de l'espace aérien audit instant de détection de conflit aérien;
- une unité d'aide à la décision (103) configurée pour déterminer une action de résolution de conflit à mettre en œuvre par ledit aéronef de référence, ladite unité d'aide à la décision (103) mettant en œuvre un algorithme d'apprentissage par renforcement profond pour déterminer ladite action à partir de ladite représentation de l'espace aérien en dimension réduite, d'informations relatives audit aéronef de référence et/ou audit au moins un autre aéronef, et d'une géométrie correspondant audit conflit aérien, les informations relatives à l'aéronef de référence et/ou audit au moins un autre aéronef comprenant la distance verticale, la distance horizontale, et l'azimut entre l'aéronef de référence et ledit au moins un autre aéronef ;
et **en ce que** ledit algorithme d'apprentissage par renforcement profond est préalablement entraîné à approximer, pour une représentation donnée d'un scénario dans l'espace aérien à l'instant où un conflit est détecté, une fonction de récompense, ladite action correspondant à une stratégie optimale maximisant ladite fonction de récompense lors de la phase d'entraînement, ledit scénario correspondant à un ensemble de plans de vols d'au moins un aéronef ;
le modèle de l'algorithme d'apprentissage par renforcement profond étant défini par un agent autonome correspondant audit aéronef et à un environnement de l'agent, le modèle d'apprentissage de l'agent étant défini par :
- un ensemble d'états *S* de l'agent dans ledit environnement,
- un ensemble d'actions possibles *A* de l'agent autonome pour résoudre les conflits dans l'espace aérien de façon à maximiser ladite fonction de récompense au cours du temps ;
- un ensemble de valeurs scalaires de récompense *R* correspondant à ladite fonction de récompense ;
et **en ce que**, à chaque pas de temps t de l'algorithme d'apprentissage par renforcement, l'agent autonome perçoit son état *sₜ* ∈ *S* à l'instant donné t et l'ensemble desdites actions possibles *A*(*sₜ*), l'agent étant apte à choisir une action *a* ∈ *A*(*sₜ*) et à recevoir de l'environnement un nouvel état *s*_{*t*+1} correspondant à l'instant donné t+1 et à une valeur de récompense *R*_{*t*+1}, l'action à choisir par l'agent étant déterminée en utilisant une fonction qui conditionnellement à un état, associe une probabilité de sélection à chaque action dans cet état.

2. Dispositif selon la revendication 1, **caractérisé en ce que** ledit auto-encodeur récurrent est préalablement entraîné en utilisant des données réelles des plans de vol de l'aéronef de référence et de l'au moins un autre aéronef.

3. Dispositif selon l'une quelconque des revendications précédentes, **caractérisé en ce que** ledit auto-encodeur est un auto-encodeur LSTM (Long Short-Term Memory).

4. Dispositif selon l'une des revendications précédentes, caractérisé en ce ladite fonction de récompense associe une valeur à chaque triplé comprenant une situation aérienne à un premier instant donné, une action prise à un temps donné, et une situation aérienne à un second instant donné, ladite valeur se décomposant en plusieurs pénalités comprenant:
- une pénalité positive si l'action prise à l'instant donné a résolu ledit conflit, ou
- une pénalité négative si l'action prise à l'instant donné n'a pas permis de résoudre ledit conflit ou a engendré au moins un autre conflit aérien ;
- une pénalité négative si l'action prise à l'instant donné engendre une nouvelle trajectoire provoquant un détour ;
- une pénalité positive si l'action prise à l'instant donné engendre une nouvelle trajectoire plus courte ;
- une pénalité négative si l'action prise à l'instant donné permet de résoudre ledit conflit aérien et la résolution a lieu proche du conflit ;
- une pénalité négative croissante avec le nombre d'actions prises pour la résolution dudit conflit aérien.

5. Dispositif selon l'une quelconque des revendications précédentes, **caractérisé en ce que** ledit algorithme d'apprentissage par renforcement profond est préalablement entraîné en utilisant des données opérationnelles et des scénarios correspondant à toutes les manœuvres possibles de l'aéronef de référence, toutes les actions possibles pour résoudre ledit conflit aérien, et toutes les catégories possibles des aéronefs en conflit.

6. Dispositif selon l'une quelconque des revendications précédentes, **caractérisé en ce que** ledit algorithme d'apprentissage par renforcement profond utilise un réseau de neurones profond mettant en œuvre une technique d'apprentissage par renforcement.

7. Dispositif selon la revendication 6, **caractérisé en ce que** ledit algorithme d'apprentissage par renforcement profond est choisi parmi les algorithmes de la famille des algorithmes de Q-learning ou de la famille des algorithmes actor-critic.

8. Dispositif selon l'une quelconque des revendications précédentes, **caractérisé en ce que** au moins deux aéronefs parmi ledit aéronef de référence et ledit au moins un autre aéronef sont de catégories différentes.

9. Dispositif selon l'une quelconque des revendications précédentes, **caractérisé en ce que** ladite action est choisie dans un groupe comprenant la régulation de la vitesse dudit aéronef de référence, le changement d'altitude dudit aéronef de référence, le changement de direction dudit aéronef de référence avec retour sur la trajectoire initiale, le direct sur un point nommé, l'attente sans faire d'action.

10. Procédé pour la gestion de trafic aérien, dans un espace aérien comprenant un aéronef de référence et au moins un autre aéronef, à partir d'une représentation tridimensionnelle de l'espace aérien à un instant où un conflit aérien est détecté entre l'aéronef de référence et ledit au moins un autre aéronef, le procédé étant **caractérisé en ce qu'**il comprend les étapes consistant à :
- déterminer (203) une représentation de l'espace aérien en dimension réduite en appliquant un auto-encodeur récurrent à ladite représentation tridimensionnelle de l'espace aérien audit instant de détection de conflit aérien, les informations relatives à l'aéronef de référence et/ou audit au moins un autre aéronef comprenant la distance verticale, la distance horizontale, et l'azimut entre l'aéronef de référence et ledit au moins un autre aéronef ;
- déterminer (205) une action de résolution de conflit à mettre en œuvre par ledit aéronef de référence, ladite action étant déterminée à partir de ladite représentation de l'espace aérien en dimension réduite, d'informations relatives audit aéronef de référence et/ou audit au moins un autre aéronef, et d'une géométrie correspondant audit conflit aérien, en mettant en œuvre un algorithme d'apprentissage par renforcement profond pour déterminer ladite action,
et **en ce que** ledit algorithme d'apprentissage par renforcement profond est préalablement entraîné, dans une phase d'entraînement, à approximer pour une représentation donnée d'un scénario dans l'espace aérien à l'instant où un conflit est détecté, une fonction de récompense, ladite action de résolution de conflit déterminée correspondant à une stratégie optimale maximisant ladite fonction de récompense dans ladite phase d'entraînement, ledit scénario correspondant à un ensemble de plans de vols d'au moins un aéronef ;
le modèle de l'algorithme d'apprentissage par renforcement profond étant défini par un agent autonome correspondant audit aéronef et à un environnement de l'agent, le modèle d'apprentissage de l'agent étant défini par :
- un ensemble d'états *S* de l'agent dans ledit environnement,
- un ensemble d'actions possibles *A* de l'agent autonome pour résoudre les conflits dans l'espace aérien de façon à maximiser ladite fonction de récompense au cours du temps ;
- un ensemble de valeurs scalaires de récompenses *R* correspondant à ladite fonction de récompense ;
et **en ce que**, à chaque pas de temps t de l'algorithme d'apprentissage par renforcement, l'agent autonome perçoit son état *sₜ* ∈ S à l'instant donné t et l'ensemble desdites actions possibles *A*(*sₜ*), l'agent étant apte à choisir une action *a* ∈ *A*(*sₜ*) et à recevoir de l'environnement un nouvel état *s*_{*t*+1} à l'instant donné t+1 et une valeur de récompense *R*_{*t*+1}, l'action à choisir par l'agent étant déterminée en utilisant une fonction qui conditionnellement à un état, associe une probabilité de sélection à chaque action dans cet état.

## Patentansprüche

1. Vorrichtung (100) zur Flugverkehrssteuerung in einem Luftraum, der ein Referenzluftfahrzeug und mindestens ein weiteres Luftfahrzeug umfasst, wobei die Vorrichtung (100) eine dreidimensionale Darstellung des Luftraums zu einem Zeitpunkt verwendet, wobei ein Luftfahrtkonflikt zwischen dem Referenzluftfahrzeug und dem mindestens einen weiteren Luftfahrzeug erkannt wird, wobei die Vorrichtung **dadurch gekennzeichnet ist, dass** sie umfasst:
- eine Einheit zum Codieren des Luftraums (101), die ausgebildet ist, um eine Darstellung des Luftraums in reduzierter Abmessung zu bestimmen, durch Anwenden eines rekursiven Auto-Encoders auf die dreidimensionale Darstellung des Luftraums zum Zeitpunkt des Bestimmens eines Luftfahrtkonflikts;
- eine Entscheidungsunterstützungseinheit (103), die ausgebildet ist, um eine vom Referenzluftfahrzeug durchzuführende Aktion zur Konfliktlösung zu bestimmen, wobei die Entscheidungsunterstützungseinheit (103) einen Algorithmus des tiefen verstärkenden Lernens anwendet, um die Maßnahme anhand der Darstellung des Luftraums in reduzierter Abmessung, von Informationen über das Referenzluftfahrzeug und/oder das mindestens eine weitere Luftfahrzeug sowie einer dem Luftfahrtkonflikt entsprechenden Geometrie zu bestimmen, wobei die Informationen bezüglich des Referenzluftfahrzeug und/oder des mindestens einen weiteren Luftfahrzeugs den vertikalen Abstand, den horizontalen Abstand und den Azimut zwischen dem Referenzluftfahrzeug und dem mindestens einen weiteren Luftfahrzeug umfassen;
und darin, dass der für tiefes verstärkendes Lernen vorab trainiert worden ist, um für eine gegebene Darstellung eines Szenarios im Luftraum zum Zeitpunkt, wobei ein Konflikt erkannt wird, eine Belohnungsfunktion anzunähern, wobei die Aktion einer optimalen Strategie entspricht, welche die Belohnungsfunktion in der Trainingsphase maximiert, wobei das Szenario einer Menge von Flugplänen mindestens eines Luftfahrzeugs entspricht;
wobei das Modell des Algorithmus für tiefes verstärkendes Lernen durch einen autonomen Agenten definiert ist, der dem Luftfahrzeug und einer Umgebung des Agenten entspricht, und wobei das Lernmodell des Agenten definiert ist durch:
- eine Reihe von Zuständen *S* des Agenten der Umgebung,
- eine Reihe von möglichen Maßnahmen *A* des autonomen Agenten zur Lösung von Konflikten im Luftraum, um die Belohnungsfunktion im Laufe der Zeit zu maximieren;
- eine Reihe von skalaren Belohnungswerten *R* die der Belohnungsfunktion entspricht;
und darin, dass der autonome Agent bei jedem Zeitschritt t des Algorithmus des verstärkenden Lernens seinen Zustand *s*ₜ ∈ *S* zum gegebenen Zeitpunkt t sowie die Menge der möglichen Aktionen *A*(*sₜ*)wahrnimmt, wobei der Agent in der Lage ist, eine Aktion *a* ∈ *A*(*sₜ*) auszuwählen und von der Umgebung einen neuen Zustand *s*_{*t*+1}, der dem jeweiligen Zeitpunkt *t* + 1 und einem Belohnungswert *R*_{*t*+1} entspricht, zu empfangen; wobei die vom Agenten zu wählende Aktion mithilfe einer Funktion bestimmt wird, die jedem Zustand eine Auswahlwahrscheinlichkeit für jede Aktion in diesem Zustand zuordnet.

2. Vorrichtung nach Anspruche 1, **dadurch gekennzeichnet, dass** der rekursive Auto-Encoder zuvor unter Verwendung von Ist-Daten der Flugpläne des Referenzluftfahrzeugs und des mindestens einen weiteren Luftfahrzeugs trainiert wird.

3. Vorrichtung nach einem der vorstehenden Ansprüche, **dadurch gekennzeichnet, dass** es sich bei dem Auto-Encoder um einen LSTM-Auto-Encoder (Long Short-Term Memory, langes Kurzzeitgedächtnis) handelt.

4. Vorrichtung nach einem der vorstehenden Ansprüche, **dadurch gekennzeichnet, dass** die Belohnungsfunktion jedem Tripel einen Wert zuordnet, die eine Luftfahrtsituation zu einem ersten gegebenen Zeitpunkt, eine zu einem gegebenen Zeitpunkt getroffene Aktion, und eine Luftfahrtsituation zu einem zweiten gegebenen Zeitpunkt umfasst, wobei sich der Wert in mehrere Strafen unterteilt, umfassend:
- eine positive Strafe, wenn die zum gegebenen Zeitpunkt getroffene Aktion einen Konflikt gelöst hat, oder
- eine negative Strafe, wenn die zum gegebenen Zeitpunkt getroffene Aktion es nicht ermöglicht hat, einen Konflikt zu lösen, oder zu mindestens einem anderen Luftkonflikt geführt hat;
- eine negative Strafe, wenn die zum gegebenen Zeitpunkt getroffene Aktion zu einer neuen Flugbahn führt, die einen Umweg hervorruft;
- eine positive Strafe, wenn die zum gegebenen Zeitpunkt getroffene Aktion zu einer neuen kürzeren Flugbahn führt;
- eine negative Strafe, wenn die zum gegebenen Zeitpunkt getroffene Aktion es ermöglicht, den Luftfahrtkonflikt zu lösen und die Lösung nahe dem Konflikt stattfindet;
- eine negative Strafe, die mit der Anzahl an zur Lösung des Luftfahrtkonflikts getroffenen Aktionen zunimmt.

5. Vorrichtung nach einem der vorstehenden Ansprüche, **dadurch gekennzeichnet, dass** der Algorithmus für tiefes verstärkendes Lernen zuvor unter Verwendung von Betriebsdaten und Szenarien trainiert wird, die allen möglichen Manövern des Referenzluftfahrzeugs, allen möglichen Maßnahmen zur Lösung des Luftfahrtkonflikts und allen möglichen Kategorien der am Konflikt beteiligten Luftfahrzeuge entsprechen.

6. Vorrichtung nach einem der vorstehenden Ansprüche, **dadurch gekennzeichnet, dass** der Algorithmus für tiefes verstärkendes Lernen ein tiefes neuronales Netzwerk verwendet, das eine Technik des verstärkenden Lernens umsetzt.

7. Vorrichtung nach Anspruche 6, **dadurch gekennzeichnet, dass** der Algorithmus des tiefen verstärkenden Lernens aus der Familie der Q-Learning-Algorithmen oder der Familie der Actor-Critic-Algorithmen ausgewählt ist.

8. Vorrichtung nach einem der vorstehenden Ansprüche, **dadurch gekennzeichnet, dass** mindestens zwei Luftfahrzeuge unter dem Referenzluftfahrzeug und dem mindestens einen weiteren Luftfahrzeug unterschiedlichen Kategorien angehören.

9. Vorrichtung nach einem der vorstehenden Ansprüche, **dadurch gekennzeichnet, dass** die Maßnahme aus einer Gruppe ausgewählt wird, die die Regelung der Geschwindigkeit des Referenzluftfahrzeugs, die Änderung der Flughöhe des Referenzluftfahrzeugs, die Richtungsänderung des Referenzluftfahrzeugs mit Rückkehr auf den ursprünglichen Flugkurs, den Direktflug zu einem bestimmten Punkt sowie das Abwarten ohne Ergreifen einer Maßnahme umfasst.

10. Verfahren zur Flugverkehrsführung in einem Luftraum, der ein Referenzluftfahrzeug und mindestens ein weiteres Luftfahrzeug umfasst, auf der Grundlage einer dreidimensionalen Darstellung des Luftraums zu einem Zeitpunkt, wobei ein Luftfahrtkonflikt zwischen dem Referenzluftfahrzeug und dem mindestens einen weiteren Luftfahrzeug erkannt wird, wobei das Verfahren **dadurch gekennzeichnet ist, dass** es die folgenden Schritte umfasst:
- Bestimmen (203) einer Darstellung des Luftraums in reduzierter Abmessung durch Anwenden eines rekursiven Auto-Encoders auf die dreidimensionale Darstellung des Luftraums zum Zeitpunkt der Erkennung eines Luftverkehrskonflikts, wobei die Informationen bezüglich des Referenzluftfahrzeugs und/oder des mindestens einen weiteren Luftfahrzeugs den vertikalen Abstand, den horizontalen Abstand und den Azimut zwischen dem Referenzluftfahrzeug und dem mindestens einen weiteren Luftfahrzeug umfassen;
- Bestimmen (205) einer vom Referenzluftfahrzeug durchzuführenden Maßnahme zur Konfliktlösung, wobei diese Maßnahme anhand der Darstellung des Luftraums in reduzierter Abmessung, von Informationen über das Referenzluftfahrzeug und/oder das mindestens eine weitere Luftfahrzeug sowie einer dem Luftverkehrskonflikt entsprechenden Geometrie ermittelt wird, indem ein Algorithmus des tiefen verstärkenden Lernens zur Bestimmung dieser Maßnahme eingesetzt wird,
und dadurch, dass der Lernalgorithmus für tiefes verstärkendes Lernen vorab trainiert worden ist, um für eine gegebene Darstellung eines Szenarios im Luftraum zum Zeitpunkt, zu dem der Konflikt erkannt wird, eine Belohnungsfunktion anzunähern, wobei die Aktion zur Konfliktlösung einer optimalen Strategie entspricht, welche die Belohnungsfunktion in der Trainingsphase maximiert, wobei das Szenario einer Reihe von Flugplänen mindestens eines Luftfahrzeugs entspricht;
wobei das Modell des Algorithmus für tiefes verstärkendes Lernen durch einen autonomen Agenten definiert ist, der dem Luftfahrzeug und einer Umgebung des Agenten entspricht, und wobei das Lernmodell des Agenten definiert ist durch:
- eine Reihe von Zuständen *S* des Agenten in der Umgebung,
- eine Reihe möglicher Aktionen *A* des autonomen Agenten zur Lösung von Konflikten im Luftraum, um die Belohnungsfunktion im Laufe der Zeit zu maximieren;
- eine Reihe von skalaren Belohnungswerten *R*, die der Belohnungsfunktion entsprechen;
und darin, dass der autonome Agent bei jedem Zeitschritt t des Algorithmus des verstärkenden Lernens seinen Zustand s*ₜ* ∈ *S* zum gegebenen Zeitpunkt t sowie die Menge der möglichen Aktionen *A*(*sₜ*)wahrnimmt, wobei der Agent in der Lage ist, eine Aktion *a* ∈ *A*(*sₜ*) auszuwählen und von der Umgebung einen neuen Zustand *s*_{*t*+1}, zum gegebenen Zeitpunkt *t* + 1 und einem Belohnungswert *R*_{*t*+1}zu empfangen; wobei die vom Agenten zu wählende Aktion mithilfe einer Funktion bestimmt wird, die jedem Zustand eine Auswahlwahrscheinlichkeit für jede Aktion in diesem Zustand zuordnet.

## Claims

1. An air traffic management device (100) for an airspace comprising a reference aircraft and at least one other aircraft, the device (100) using a three-dimensional representation of the airspace at a time when an air traffic conflict is detected between the reference aircraft and said at least one other aircraft, the device being **characterized by** comprising:
- an airspace encoding unit (101) configured to determine a reduced-dimension representation of the airspace by applying a recurrent autoencoder to said three-dimensional representation of the airspace at said air conflict detection time;
- a decision support unit (103) configured to determine a conflict-resolution action to be implemented by said reference aircraft, said decision support unit (103) implementing a deep reinforcement learning algorithm to determine said action based on said reduced-dimension representation of the airspace, information relating to said reference aircraft and/or said at least one other aircraft, and a geometry corresponding to said air conflict, the information relating to the reference aircraft and/or said at least one other aircraft comprising the vertical distance, the horizontal distance, and the azimuth between the reference aircraft and said at least one other aircraft;
and in that said deep reinforcement learning algorithm is pre-trained to approximate, for a given representation of an airspace scenario at the moment a conflict is detected, a reward function, said action corresponding to an optimal strategy that maximizes said reward function during the training phase, wherein said scenario corresponds to a set of flight plans for at least one aircraft;
the deep reinforcement learning algorithm model being defined by an autonomous agent corresponding to said aircraft and to an environment of the agent, the agent's learning model being defined by:
- a set of states *S* of the agent in said environment,
- a set of possible actions *A* of the autonomous agent for resolving conflicts in airspace so as to maximize said reward function over time;
- a set of scalar reward values *R* corresponding to said reward function;
and in that, at each time step t of the reinforcement learning algorithm, the autonomous agent perceives its state s*ₜ* ∈ *S* at the given instant t and the set of said possible actions *A*(*sₜ*), the agent being capable of selecting an action *a* ∈ *A*(*sₜ*) and receiving from the environment a new state *s*_{*t*+1} corresponding to the given instant *t* + 1 and a reward value *R*_{*t*+1}, the action to be selected by the agent being determined using a function that, given a state, associates a selection probability with each action in that state.

2. The device according to claim 1, **characterized in that** said recurrent autoencoder is pre-trained using real-world flight plan data from the reference aircraft and the at least one other aircraft.

3. The device according to any of the preceding claims, **characterized in that** said autoencoder is an LSTM (Long Short-Term Memory) autoencoder.

4. The device according to one of the preceding claims, **characterized in that** said reward function assigns a value to each triplet comprising an air traffic situation at a first given time, an action taken at a given time, and an air traffic situation at a second given time, said value being broken down into several penalties comprising:
- a positive penalty if the action taken at the given time resolved said conflict, or
- a negative penalty if the action taken at the given time failed to resolve said conflict or caused at least one other air traffic conflict;
- a negative penalty if the action taken at the given time results in a new flight path causing a detour;
- a positive penalty if the action taken at that moment results in a new, shorter flight path;
- a negative penalty if the action taken at that moment resolves the air traffic conflict and the resolution occurs close to the conflict;
- a negative penalty that increases with the number of actions taken to resolve the air traffic conflict.

5. The device according to any one of the preceding claims, **characterized in that** said deep reinforcement learning algorithm is pre-trained using operational data and scenarios corresponding to all possible maneuvers of the reference aircraft, all possible actions to resolve said air conflict, and all possible categories of aircraft in conflict.

6. The device according to any one of the preceding claims, **characterized in that** said deep reinforcement learning algorithm uses a deep neural network implementing a reinforcement learning technique.

7. The device according to claim 6, **characterized in that** said deep reinforcement learning algorithm is selected from the family of Q-learning algorithms or the family of actor-critic algorithms.

8. The device according to any one of the preceding claims, **characterized in that** at least two of said reference aircraft and said at least one other aircraft are of different categories.

9. The device according to any one of the preceding claims, **characterized in that** said action is selected from a group comprising regulating the speed of said reference aircraft, changing the altitude of said reference aircraft, changing the direction of said reference aircraft and returning to the initial flight path, flying directly to a designated point, and holding position without taking any action.

10. A method for air traffic management in an airspace comprising a reference aircraft and at least one other aircraft, based on a three-dimensional representation of the airspace at a time when an air conflict is detected between the reference aircraft and said at least one other aircraft, the method being **characterized by** comprising the steps of:
- determining (203) a reduced-dimension representation of the airspace by applying a recurrent autoencoder to said three-dimensional representation of the airspace at said time of air conflict detection, wherein the information relating to the reference aircraft and/or said at least one other aircraft includes the vertical distance, the horizontal distance, and the azimuth between the reference aircraft and said at least one other aircraft;
- determining (205) a conflict-resolution action to be implemented by said reference aircraft, said action being determined based on said reduced-dimension representation of airspace, information relating to said reference aircraft and/or said at least one other aircraft, and a geometry corresponding to said air conflict, by implementing a deep reinforcement learning algorithm to determine said action,
and in that said deep reinforcement learning algorithm is first trained, during a training phase, to approximate a reward function for a given representation of a scenario in airspace at the moment a conflict is detected, with said determined conflict-resolution action corresponding to an optimal strategy that maximizes said reward function during said training phase, wherein said scenario corresponds to a set of flight plans for at least one aircraft;
the deep reinforcement learning algorithm model being defined by an autonomous agent corresponding to said aircraft and to an environment of the agent, the agent's learning model being defined by:
- a set of states S of the agent in said environment,
- a set of possible actions A of the autonomous agent for resolving conflicts in airspace so as to maximize said reward function over time;
- a set of scalar reward values R corresponding to said reward function;
and in that, at each time step t of the reinforcement learning algorithm, the autonomous agent perceives its state *sₜ* ∈ *S* at the given instant t and the set of said possible actions *A*(*sₜ*), the agent being capable of selecting an action *a* ∈ *A*(*sₜ*) and receiving from the environment a new state *s*_{*t*+1} to the given instant *t* + 1 and a reward value *R*_{*t*+1}, the action to be selected by the agent being determined using a function that, given a state, associates a selection probability with each action in that state.
